(19) Europäisches Patentamt
European Patent Office
Office européen des brevets

(11) EP 3 633 702 B1

(12) # EUROPEAN PATENT SPECIFICATION

(45) Date of publication and mention of the grant of the patent:
**20.11.2024 Bulletin 2024/47**

(21) Application number: **18810398.0**

(22) Date of filing: **28.05.2018**

(51) International Patent Classification (IPC):
***H01G 9/00*** *(2006.01)* ***H01G 9/028*** *(2006.01)*
***C08G 61/12*** *(2006.01)* ***H01G 9/052*** *(2006.01)*
***H01G 9/15*** *(2006.01)*

(52) Cooperative Patent Classification (CPC):
**C08G 16/0275; C08G 61/126; H01G 9/0036; H01G 9/028; H01G 9/15;** C08G 2261/1424; C08G 2261/3223; C08G 2261/43; C08G 2261/512; H01G 9/052

(86) International application number:
**PCT/JP2018/020297**

(87) International publication number:
**WO 2018/221438 (06.12.2018 Gazette 2018/49)**

(54) **METHOD FOR MANUFACTURING CONDUCTIVE POLYMER SOLID ELECTROLYTIC CAPACITOR, AND CONDUCTIVE POLYMER**

VERFAHREN ZUR HERSTELLUNG EINES LEITFÄHIGEN POLYMERFESTELEKTROLYTKONDENSATORS UND LEITFÄHIGES POLYMER

PROCÉDÉ DE FABRICATION D'UN CONDENSATEUR ÉLECTROLYTIQUE SOLIDE POLYMÈRE CONDUCTEUR, ET POLYMÈRE CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2017 JP 2017108403**

(43) Date of publication of application:
**08.04.2020 Bulletin 2020/15**

(73) Proprietor: **Soken Chemical & Engineering Co., Ltd.**
**Toshima-ku**
**Tokyo 171-8531 (JP)**

(72) Inventors:
- **MIYAMOTO, Takeshi**
**Sayama-shi, Saitama 350-1320 (JP)**
- **SAKAI, Hisakazu**
**Kobe-shi, Hyogo 652-0806 (JP)**

(74) Representative: **Gulde & Partner**
**Patent- und Rechtsanwaltskanzlei mbB**
**Wallstraße 58/59**
**10179 Berlin (DE)**

(56) References cited:
**WO-A1-2016/111277** **WO-A1-2016/111277**
**WO-A1-2016/158752** **JP-A- 2012 241 068**
**US-A1- 2011 182 002** **US-A1- 2013 279 079**
**US-A1- 2014 211 372**

- **WEN-CHANG CHEN ET AL: "Theoretical and Experimental Characterization of Small Band Gap Poly(3,4-ethylenedioxythiophene methine)s", MACROMOLECULES, vol. 37, no. 16, 1 August 2004 (2004-08-01), WASHINGTON, DC, UNITED STATES, pages 5959 - 5964, XP055694549, ISSN: 0024-9297, DOI: 10.1021/ma049557f**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 633 702 B1

## Description

### Technical field

The present invention relates to a method for manufacturing a conductive polymer solid electrolytic capacitor and a dispersion including a conductive polymer.

### Background Field

A capacitor is a kind of electronic component used in various electronics such as personal computers and mobile phones and, basically, has a structure in which a dielectric is held between two opposing electrode plates. When a DC voltage is applied to the plates, electric charges are stored in each electrode by the polarization action of the dielectric. There are many types of capacitors and, for example, an aluminum electrolytic capacitor, a multilayer ceramic capacitor, a tantalum electrolytic capacitor, a film capacitor, and the like are known. In recent years, as electronics has become smaller, lighter, and more functional, small and high capacity capacitors are demanded, and many studies are conducted to improve performance of capacitors.

Many prior arts have reported using a conductive polymer as a conductive material that can be used for a capacitor electrode. The conductive polymer has a conjugated structure and is composed of a combination of a main skeleton enabling electron transfer and a dopant for giving electron or hole carriers to the main skeleton in the expanded conjugate. As the conductive main skeleton, a skeleton having a chemical structure with a developed n-electron conjugated system, such as a polymer including 3,4-ethylenedioxythiophene (EDOT), pyrrole, aniline, and the like, is generally used. Various dopants, such as an inorganic Lewis acid and an organic proton acid, correspond to it. Of these, a sulfonic acid compound as an organic protonic acid is generally used.

For example, Patent Literature 1 has reported a method for manufacturing an electrolytic capacitor by impregnating a PEDOT / PSS aqueous dispersion into a porous metal element. In Patent Literature 1, the PEDOT / PSS, having a particle diameter of about several tens of nanometers, was prepared by polymerizing EDOT with using polystyrene sulfonic acid (PSS) as a dispersant and a dopant.

Patent literature 2 discloses a conductive polymer capable of adjusting an ionization potential by using a conductive polymer obtained by polymerizing various EDOT derivatives with using PSS as a dopant.

Further conductive polymers are described in Patent literatures 3, 4 and 5.

### Citation List

### Patent literature

Patent Literature 1: JP 2009-508341 A
Patent Literature 2: WO 2016/111277 A
Patent Literature 3: US 2014/0211372 A1
Patent Literature 4: US 2011/0182002 A1
Patent Literature 5: US 20130279079 A1

### Summary of Invention

### Technical Problem

In the method described in Patent Literature 1, since the conductive polymer could not sufficiently fill the inside of the porous material, the capacitance appearance rate of the conductive polymer solid electrolytic capacitor was insufficient.

The present invention has been made in view of such circumstances, and an object thereof is to provide a method for manufacturing a conductive polymer solid electrolytic capacitor having an excellent capacitance appearance rate, and a conductive polymer suitable for the method for manufacturing.

### Solution to Problem

According to the present invention, a method for manufacturing a conductive polymer solid electrolytic capacitor is provided that comprises:

a conductive polymer introduction step;
a solvent removal step,
wherein:

the conductive polymer introduction step comprises impregnating a porous material with a dispersion,

the dispersion includes a conductive polymer dispersed in a non-aqueous solvent,
the conductive polymer includes at least one of the structural units represented by the following formula (1) and the following formula (2),

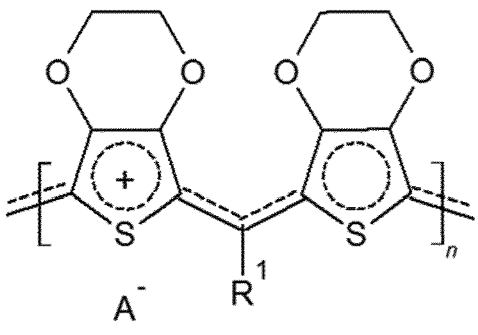

(1)

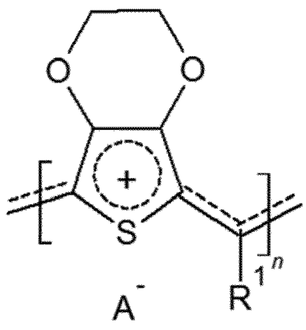

(2)

in the formulas (1) and (2), $R^1$ is an alkyl group having 1 to 12 carbon atoms, an alkoxy group having 1 to 12 carbon atoms, an alkylene oxide group having 1 to 12 carbon atoms and having 1 to 50 repeating units, a phenyl group optionally having a substituent, a heterocyclic group optionally having a substituent, or a condensed ring group optionally having a substituent, $A^-$ is an anion derived from a dopant and n is 2 or more and 300 or less,
wherein 80 to 100 mass % of the dopant include a dopant having 1 or 2 anions in one dopant molecule;
the conductive polymer has a volume average particle diameter D50 of 0.1 to 100 nm in the dispersion, measured by a photodynamic scattering method;
the porous material includes an electrode material which is a sintered body of particles, and a dielectric covering a surface of the electrode material; and

the solvent removal step comprises removing at least a part of the non-aqueous solvent and forming a solid electrolyte which covers the surface of the porous material.

[chemical formula 1]

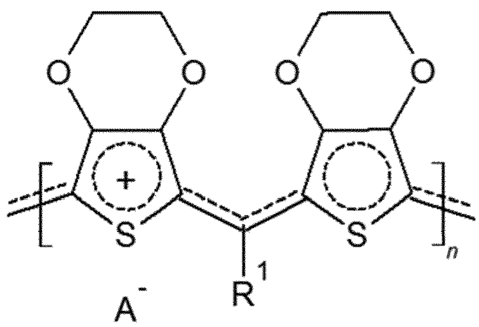

(1)

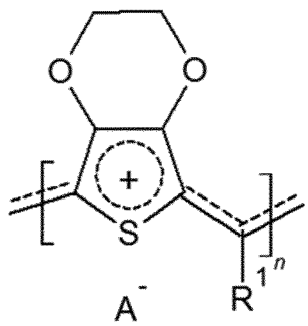

(2)

The inventors have found that, by using the method for manufacturing a conductive polymer solid electrolytic capacitor described above, pores of a porous material can be easily impregnated with a dispersion including a conductive

polymer, and as a result, a conductive polymer solid capacitor with an excellent capacitance appearance rate can be produced and have completed the present invention.

As shown in Fig. 1, the conductive polymer solid electrolytic capacitor 1, obtained by the method for manufacturing the conductive polymer solid electrolytic capacitor of the present invention has an electrode material which forms a porous material and works as a anode 2, an oxide thin film which is obtained by oxidation treatment on the surface of the porous material and works as a dielectric 3, and a conductive polymer which fills the pores of the porous material and works as a cathode 4.

In the present application, a capacitance appearance rate is shown by the following formula. The capacitance appearance rate is a ratio of an actual capacitance (2), measured after introducing a solid electrolyte into pores of a porous material, to a capacitance (1), measured with pores of a porous material filled with an electrolyte (sulfuric acid, phosphoric acid, and the like.).

$$\text{Capacitance appearance rate } (\%) = (2) / (1) \times 100$$

Thus, a high capacitance appearance rate indicates that the pores of the porous material are filled with sufficient quantity of the solid electrolyte (the conductive polymer in the present invention), and that the resulting solid electrolytic capacitor exerts sufficiently its electrode capacitance.

The following are various examples of the present invention. The following embodiments can be combined with each other.

Preferably, an average pore diameter of the porous material is 0.03 μm or more and 5.0 μm or less.

Preferably, the electrode material includes tantalum, niobium or an alloy thereof.

Preferably, the dopant includes at least one atom selected from the group consisting of oxygen, fluorine, and nitrogen.

According to another aspect of the present disclosure, a dispersion including a conductive polymer dispersed in a non-aqueous solvent is provided, wherein the conductive polymer comprises at least one of the structural units represented by the following formula (1) and the following formula (2)

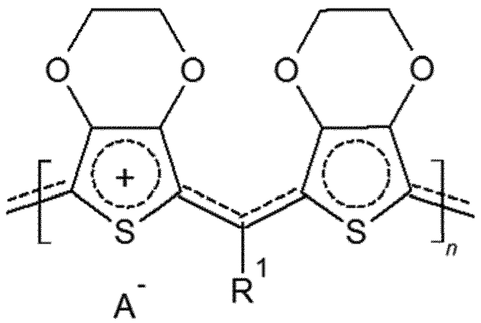

(1)

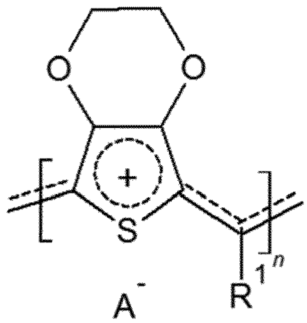

(2)

wherein:

in the formulas (1) and (2), $R^1$ is an alkyl group having 1 to 12 carbon atoms, an alkoxy group having 1 to 12 carbon atoms, an alkylene oxide group having 1 to 12 carbon atoms and having 1 to 50 repeating units, a phenyl group optionally having a substituent, a heterocyclic group optionally having a substituent, or a condensed ring group optionally having a substituent, $A^-$ is an anion derived from a dopant and n is 2 or more and 300 or less;
wherein 80 to 100 mass % of the dopant include a dopant having 1 or 2 anions in one dopant molecule;
the conductive polymer has a volume average particle diameter D50 of 0.1 to 100 nm in the dispersion, measured by a photodynamic scattering method; and
the dopant includes at least one selected from the group consisting of a sulfonic acid derivative, a boronic acid derivative, a carboxylic acid derivative, and a phosphoric acid derivative.

[chemical formula 2]

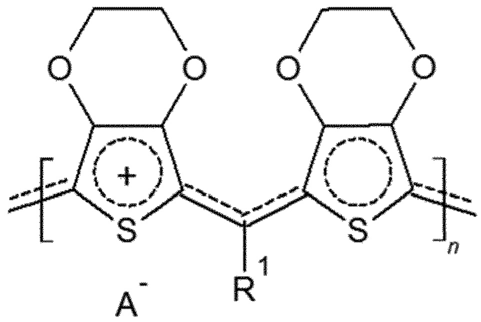

(1)

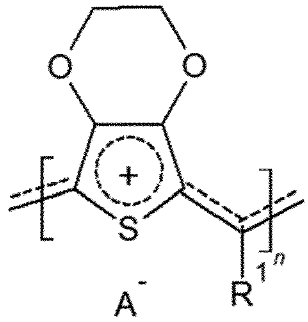

(2)

Fig. 1 is a schematic diagram showing an example of a partial structure of a conductive polymer solid electrolytic capacitor obtained by the production method of the present invention.
Fig. 2 is a graph showing the result of measuring a pore diameter of a porous material used in evaluating a capacitance appearance rate.

**MODE FOR CARRYING OUT THE INVENTION**

The embodiments of the present invention will be described in detail as below.
The method for manufacturing the conductive polymer solid electrolytic capacitor according to the present invention comprising a conductive polymer introduction step and a solvent removal step. From the viewpoint of sufficiently filling the pores of the porous material with the conductive polymer, each of these steps is preferably performed a plurality of times, such as 2 times or more, 3 times or more, 4 times or more.

1. Conductive polymer introduction step

(1) Conductive polymer

By including at least one of the structural units represented by formula (1) and formula (2), the conductive polymer used in the present invention has a main skeleton, which has a developed n-conjugated system and is suitable for the conductive polymer.
$R^1$ in the formula (1) and the formula (2) is an alkyl group having 1 to 12 carbon atoms, an alkoxy group having 1 to 12 carbon atoms, an alkylene oxide group having 1 to 12 carbon atoms and having 1 to 50 repeating units, a phenyl group optionally having any substituent at any position, heterocyclic group optionally having any substituent at any position, or condensed ring group optionally having any substituent at any position. From the viewpoint of conductivity, an alkyl group and a phenyl group are preferable, and among them, a phenyl group having substituents at 2,6- positions can be more preferably used.
An arbitrary substituent, which the phenyl group, the heterocyclic group, or the condensed ring group has, includes, for example, an alkyl group having 1 to 12 carbon atoms, an alkoxy group having 1 to 12 carbon atoms, an alkylene oxide group having 1 to 12 carbon atoms and having 1 to 50 repeating units, a phenyl group, a naphthyl group, a hydroxy group, a halogen such as a fluorine, a chlorine, a bromine and an iodine, an aldehyde group, an amino group, a cycloalkyl group having 3 to 8 carbons, and the like.
As the heterocyclic group for example, silole ring, furan ring, thiophene ring, oxazole ring, pyrrole ring, pyridine ring, pyridazine ring, pyrimidine ring, pyrazine ring, triazine ring, oxadiazole ring, triazole ring, imidazole ring, pyrazole. ring, thiazole ring, indole ring, benzimidazole ring, benzthiazole ring, benzoxazole ring, quinoxaline ring, quinazoline ring, phthalazine ring, thienothiophene ring, carbazole ring, azacarbazole ring (which represents that any one or more of the carbon atoms constituting the carbazole ring is replaced by a nitrogen atom), dibenzosilole ring, dibenzofuran ring, dibenzothiophene ring, benzothiophene ring, ring in which any one or more of carbon atoms constituting dibenzofuran

ring is replaced by nitrogen atom, benzodifuran ring, benzodithiophene ring, acridine ring, benzoquinoline ring , phenazine ring, phenanthridine ring, phenanthroline ring, cyclazine ring, kindrin ring, tepenidine ring, quinindrine ring, triphenodithiazine ring, triphenodioxazine ring, phenanthrazine ring, anthrazine ring, perimidine ring, naphthofuran ring, naphtho thiophene ring, naphthodifuran ring, naphthodithiophene ring, anthrafuran ring, anthradifuran ring, anthrathiophene ring, anthradithiophene ring, thianthrene ring, phenoxathiin ring, dibenzocarbazole ring, indolocarbazole ring, dithienobenzene ring, epoxy ring, aziridine ring, thiirane ring, oxetane ring, azetidine ring, thietane ring, tetrahydrofuran ring, dioxolane ring, pyrrolidine ring, pyrazolidine ring, imidazolidine ring, oxazolidine ring, tetrahydrothiophene ring, sulfolane ring, thiazolidine ring, ε-caprolactone ring, ε-caprolactam ring, piperidine ring, hexahydropyridazine ring, hexahydropyrimidine ring, piperazine ring, morpholine ring, tetrahydropyran ring, 1,3-dioxane ring, 1,4- dioxane ring, trioxane ring, tetrahydrothiopyran ring, thiomorpholine ring, thiomorpholine-1,1-dioxide ring, pyranose ring, diazabicyclo [2,2,2] -octane ring, phenoxazine ring, phenothiazi ring, okisantoren ring, thioxanthene ring, monovalent group derived from phenoxathiin ring can be mentioned.

As the condensed ring for example, naphthalene ring, azulene ring, anthracene ring, phenanthrene ring, pyrene ring, chrysene ring, naphthacene ring, triphenylene ring, acenaphthene ring, coronene ring, fluorene ring, fluoranthrene ring, pentacene ring, perylene ring, pentaphen ring, picene ring, pyranthrene ring, and the like can be mentioned.

As an arbitrary substituent, for example, an alkyl group having 1 to 12 carbon atoms, an alkoxy group having 1 to 12 carbon atoms, an alkylene oxide group having 1 to 12 carbon atoms and having 1 to 50 repeating units, a phenyl group, a naphthyl group, a hydroxy group, a halogen such as a fluorine, a chlorine, a bromine, a iodine, an aldehyde group, an amino group, a cycloalkyl group having 3 to 8 carbon atoms can be mentioned.

The dopant is not particularly limited, but preferably includes at least one atom selected from the group consisting of oxygen, fluorine, and nitrogen, and more preferably at least one selected from the group consisting of a sulfonic acid derivative, a boronic acid derivative, a carboxylic acid derivative, and a phosphoric acid derivative.

As the dopant, for example, polyanion such as polystyrene sulfonic acid, poly-2-sulfoethyl (meth) acrylate, poly-3-propylsulfo (meth) acrylate and copolymers thereof, or alkali metal salt thereof, and monoanion such as p-toluene sulfonic acid, dodecyl sulfonic acid, dodecylbenzene sulfonic acid, di (2-ethylhexyl)sulfosuccinic acid, polyoxyethylene polycyclic phenyl ether sulfonate, polyoxyethylene aryl ether sulfate, tetrafluoroboric acid, trifluoro Acetic acid, hexafluorophosphoric acid, trifluoromethane sulfonimide, and the like, or alkali metal salt thereof can be mentioned.

From the viewpoint of improving dispersibility for a non-aqueous solvent and facilitating introduction into pores, a dopant having 1 or 2 anions in one dopant molecule is included, and preferably 1 anion in one dopant molecule is included, wherein 80 to 100 mass% of the dopant include a dopant having 1 or 2 anions in one dopant molecule.

One kind of dopant may be used alone, or two or more kinds may be used.

When two or more kinds of dopant are used, the content ratio of the dopant component having 1 or 2 anions in one dopant molecule is 80mass% to 100mass%, and may be within a range between.

The number of structural units (1) and (2) that the conductive polymer has is not particularly limited, is preferably 2 or more and 300 or less. Specifically, it may be, for example, 2, 5, 10, 20, 30, 40, 50, 60, 70, 80, 90, 100, 200 or 300, and within a range between any two of the numerical values exemplified here.

The conductivity of the conductive polymer is preferably 0.01 S/cm or more and 1000 S/cm or less, for example, 0.02, 0.05, 0.1, 0.2, 0.3, 0.5, 0.8, 1, 2, 5, 10, 50, 100, 500 S/cm or the like, and may be within a range between any two of the numerical values exemplified here.

The method for synthesizing the conductive polymer is not particularly limited. For example, the conductive polymer can be obtained by a condensation polymerization and / or an oxidative polymerization by adding a dopant and an oxidizing agent to 3,4-ethylenedioxythiophene (EDOT) and aldehyde, followed by heating and stirring in a solvent under an inert gas atmosphere. Further, an oxidant as a decomposition accelerator may be added.

The oxidant is not particularly limited and may be any oxidant allowing the polymerization reactions to proceed. For example, ammonium peroxodisulfate, potassium peroxodisulfate, sodium peroxodisulfate, iron chloride (III), iron sulfate (III), iron hydroxide. (III), iron tetrafluoroborate (III), hexafluorophosphoric acid iron (III), copper sulfate (II), copper chloride (II), copper tetrafluoroborate (II), hexafluorophosphoric acid copper (II) ammonium oxodisulfate, organic peroxide, and the like can be mentioned.

The solvent is not particularly limited and may be any solvent in which condensation reaction of the heterocyclic compound and the aldehyde derivative proceeds. As a solvent, alcohol solvents such as Gamma butyrolactone, propylene carbonate, ethylene carbonate, acetonitrile, tert-butyl methyl ether, ethyl acetate, benzene, heptane, water, methanol, ethanol, isopropyl alcohol, butanol, and ketone solvent such as acetone, methyl ethyl ketone, methyl isobutyl ketone, and glycol solvents such as methyl cellosolve, ethyl cellosolve, propylene glycol methyl ether, propylene glycol ethyl ether, and lactic acid solvents such as methyl lactate and ethyl lactate, and the like can be mentioned. In the synthesis of the conductive polymer, the same solvent as that used in the step of introducing conductive polymer may be used, a different solvent may be used, or a non-aqueous solvent may be used. The solvent used in the synthesis is preferably an aprotic solvent in view of efficiency of the oxidant.

The content ratio of the structural units (1) and (2) contained in the conductive polymer according to the present

invention can be adjusted by the ratio of amount of EDOT and aldehyde added. The mole ratio of EDOT and aldehyde added, EDOT/aldehyde, is 1/1, 2/1, 3/1, 4/1, and 5/1, for example, and may be within the range between any two of the numerical values. From the viewpoint of the balance between solubility and conductivity, a ratio of 1/1 to 4/1 is preferable, and a ratio of 1/1 to 2/1 is more preferable.

(2) Non-aqueous solvent

In the non-aqueous solvent according to the present invention, the conductive polymer is dispersed and the resulting dispersion is used to impregnate the porous material with.

The non-aqueous solvent is not particularly limited as long as the conductive polymer can be dispersed in it. As a non-aqueous solvent is alcohol solvents such as methanol, ethanol, isopropyl alcohol, butanol, ketone solvents such as acetone, methyl ethyl ketone, methyl isobutyl ketone, glycol solvents such as methyl cellosolve, ethyl cellosolve, propylene glycol methyl ether, propylene glycol ethyl ether, Lactic acid solvents such as methyl lactate and ethyl lactate, toluene, ethyl acetate, propylene carbonate, γ-butyrolactone, methyl ethyl ketone, toluene, isopropyl alcohol, ethylene glycol, dimethyl sulfoxide, methanol, benzyl alcohol and the like can be mentioned. Propylene carbonate, γ-butyrolactone, methyl ethyl ketone, toluene, isopropyl alcohol, ethylene glycol, dimethyl sulfoxide, methanol, benzyl alcohol and the like is particularly preferred. A plurality of solvents may be used in combination.

(3) Dispersion

The dispersion includes the above conductive polymer dispersed in the non-aqueous solvent.

The non-volatile content excluding the solvent component from the dispersion is not particularly limited, but is, for example, 1.0mass% or more and 20.0mass% or less, specifically, 0.5, 1.0, 1.5, 2.0, 2.5, 3.0, 5.0, 10.0, 15.0, 20.0mass%, and the like, and may be within a range between any two of the numerical values exemplified here.

The conductive polymer in the dispersion has a volume average particle diameter D50 of 0.1 to 100 nm. The average particle diameter of the conductive polymer in the dispersion is preferably small from the viewpoint of easy introduction of the conductive polymer into the pores of the porous material. For example, D10 is 0.1nm, 0.5nm, 1nm, 3nm, 5nm, 10nm, 25nm, 40nm, 50nm, and may be in the range between any two of these numerical values. D50 is 0.1 nm, 0.5 nm, 1 nm, 3 nm, 5 nm, 10 nm, 20 nm, 40 nm, 55 nm, 80 nm, 100 nm, and may be within the range between any two of these numbers. D90 is 0.1 nm, 0.5 nm, 1 nm, 5 nm, 10 nm, 40 nm, 85 nm, 100 nm, 120 nm, and may be within the range between any two of these numbers. D90/D10, which is the ratio of D90 and D10, is 1, 1.5, 2, 2.5, 3.5, 4, 4.5, 5, and the like, and may be within the range between any two of the numerical values exemplified here.

(4) Porous material

The porous material used in the present invention includes an electrode material that is a sintered body of particles and a dielectric that covers the surface of the electrode material.

The electrode material may include, for example, a material containing aluminum, tantalum, niobium or an alloy thereof. From the viewpoint of using a porous material having smaller pores, the electrode material preferably includes tantalum, niobium or an alloy thereof.

From the viewpoint of preventing weak bonding between the particles when sintered, the average particle diameter of the electrode material particles is preferably 0.01 μm or more, more preferably 0.03 μm or more. From the viewpoint of making the pores of the porous body smaller, 10 μm or less is preferable, and 5 μm or less is more preferable. The average particle diameter of the electrode material particles is, for example, 0.01, 0.03, 0.05, 0.1, 0.2, 0.3, 0.4, 0.5, 0.6, 0.8, 1.0, 1.5, 2.0, 3.0, 5.0, 10.0 μm, and the like, and may be within a range between any two of the numerical values.

A method for producing a sintered body of particles is not particularly limited, but includes a method in which the particles are once compressed to form a pellet and then heated and sintered. For example, a tantalum sintered element can be manufactured in accordance with the test condition of 100 kCV powder specified in Table 1 of the appendix of "Test method of tantalum sintered anodes for electrolytic capacitors" of Standard of Electronic Industries Association of Japan EIAJ RC-2361A.

The average pore diameter of the porous material is preferably 0.01 μm or more and 10.0 μm or less, more preferably 0.03 μm or more and 5.0 μm or less, for example, 0.01, 0.05, 0.1, 0.2, 0.3, 0.4, 0.5, 0.6, 0.8, 1.0, 1.5, 2.0, 3.0, 5.0, 10.0 μm, and the like, and may be within the range between any two of the numerical values exemplified here.

A CV value (μF · V/g) is generally used as an index to evaluate the electrical characteristics of an electrode material for a capacitor.

Here, the charge capacity C per unit voltage that the capacitor can store is represented as: $C = (\varepsilon \cdot S) / t$, S: electrode area ($m^2$), t: distance between electrodes (m), ε: dielectric constant (F / m)

Thus, the charge capacity C increases as the electrode area S increases, the distance between electrodes t

decreases, and the dielectric constant ε increases. Therefore, in order to increase the CV value, it is effective to increase the electrode area S, for example, by selecting a porous material as the electrode material or to reduce the distance between electrodes t, for example, by making the dielectric thinner.

The CV value of the electrode material is, for example, 50, 100, 150, 200, 250, 300 kCV/g, and the like, and may be within a range between any two of the numerical values exemplified here.

The thickness of the dielectric is preferably thin from the viewpoint of increasing the CV value, but is preferably not too thin from the viewpoint of preventing dielectric breakdown. The film thickness of the dielectric is, for example, 1, 2, 5, 10, 20, 30, 50, 100 nm, and the like, and may be in the range between any two of the numerical values exemplified here.

The dielectric used in the present invention is an oxide thin film obtained by oxidation treatment of the surface of the electrode material. The method of oxidizing the surface of the electrode material is not particularly limited. For example, the method of anodizing in an aqueous solution by applying a voltage can be mentioned.

As a method of impregnating the dispersion into the porous material, it is common to immerse the porous material in the dispersion and a method of increasing or decreasing the pressure, and applying vibration, ultrasonic waves, or heat can be mentioned for example.

2. Solvent removal step

The solvent removal step according to the present invention is to remove at least a part of the non-aqueous solvent and form the solid electrolyte that covers the surface of the porous material.

The method for removing the solvent is not particularly limited, and a drying method, a heating method, and a combination thereof can be mentioned. As the heating method, a method of holding in a heating chamber and a method of contacting with a hot plate can be mentioned. From the viewpoint of preventing the denaturation of the porous material, the heating temperature is preferably 350°C or lower, more preferably 250°C or lower. From the viewpoint of quickly removing the solvent, the heating temperature is preferably 100°C or higher, more preferably 120°C or higher.

Examples

[Manufacture of dispersions]

(Production Example 1)

300 g of propylene carbonate, 4.5 g of 3,4-ethylenedioxythiophene (EDOT), and 3.6 g of PTS · $H_2O$ (p-toluene sulfonic acid monohydrate) were added to a 1L flask and stirred for 30 min. Then, under nitrogen perge, 0.06 g of Iron (III) tris(4-methylbenzenesulfonate) (Fe $(PTS)_3$), 2.4 g of 2, 4, 6-trimethylbenzaldehyde, 12 g of benzoyl peroxide (purity 75mass%, manufactured by Nihonyushi Corporation) were further added and the mixture was stirred at 40°C for 20 hours. Then, 1 g of Lewatit (registered trademark) MP62WS (manufactured by LANXESS) and 1 g of Lewatit (registered trademark) monoplus S108H (manufactured by LANXESS), which were ion exchange resins, were added and the resulting mixture was stirred for 5 hours, and filtered. The obtained filtrate was treated with an ultrasonic homogenizer to obtain a propylene carbonate dispersion A of a conductive polymer with a non-volatile content of 2.4mass%.

(Production Example 2)

A propylene carbonate dispersion B of a conductive polymer with a non-volatile content of 2.6mass% was obtained by the same procedure except that 2.4 g of 2,4,6-trimethylbenzaldehyde in Production Example 1 was changed to 2.8 g of 2,6- dichlorobenzaldehyde s.

(Production Example 3)

A propylene carbonate dispersion C of a conductive polymer with a non-volatile content of 2.1mass% was obtained by the same procedure except that 2.4 g of 2,4,6-trimethylbenzaldehyde in production example 1 was changed to 0.58 g of butylaldehyde.

(Production Example 4)

A propylene carbonate dispersion D of a conductive polymer with a non-volatile content of 2.1mass% was obtained by the same procedure except that 2.4 g of 2,4,6-trimethylbenzaldehyde in Production Example 1 was changed to 0.85 g of benzaldehyde.

(Production Example 5)

200 g of acetonitrile and 3.5 g of 2,6-dichlorobenzaldehyde were added to a 1L flask. The mixture was heated to 80°C after nitrogen purge was performed for 30 min. Next, 6.2 g of copper tetrafluoroborate hydrate was added and stirred until a homogeneous solution was obtained, then 2.8 g of EDOT was added and stirred for 1 hour. Further, 6.2 g of copper tetrafluoroborate hydrate was added and the resultant mixture was stirred for 4 hours. 200 g of methanol was added to the flask to sufficiently precipitate solids, and then suction filtration was performed with ADVANTEC 4A filter paper (JIS P 3801), and the residue was washed with methanol until the filtrate became transparent. Thereafter, the residue was dried at 40°C to obtain 5.2 g of a conductive polymer powder E.

9.87 g of propylene carbonate was added to 0.13 g of the conductive polymer E, and the mixture was stirred, and dispersed with an ultrasonic homogenizer to obtain a propylene carbonate dispersion E of a conductive polymer with a non-volatile content of 1.3mass%.

(Production Example 6)

A propylene carbonate dispersion F of a conductive polymer with a non-volatile content of 2.3mass% was obtained by the same procedure except that PTS · $H_2O$ in Production Example 2 was changed to 2.2 g of trifluoromethanesulfonimide.

(Production Example 7)

A propylene carbonate dispersion G of a conductive polymer with a non-volatile content of 2.3mass% was obtained by the same procedure except that PTS · $H_2O$ in Production Example 2 was changed to 1.8 g of trifluoroacetic acid.

(Production Example 8)

A propylene carbonate dispersion H of a conductive polymer with a non-volatile content 2.3mass% was obtained by the same procedure except that PTS · $H_2O$ in Production Example 2 was changed to 4.2 g of 55mass% aqueous solution of hexafluorophosphoric acid.

(Production Example 9)

A propylene carbonate dispersion I of a conductive polymer with a non-volatile content of 2.5mass% was obtained by the same procedure except that PTS · $H_2O$ in Production Example 2 was changed to 10 g of 18mass% aqueous solution of polystyrene sulfonic acid (PSS) (manufactured by Akzo Nobel) and 1.8 g of PTS · $H_2O$.

(Production Example 10 not forming part of the present invention)

A γ- butyrolactone dispersion J of a conductive polymer with a non-volatile content of 2.5mass% was obtained in the same procedure except that propylene carbonate in Production Example 1 was changed to γ- butyrolactone (y-BL).

(Production Example 11)

20 g of methyl ethyl ketone was added to 82 g of the liquid A produced in Production Example 1 and the resultant mixture was stirred to obtain a dispersion K of a non-volatile content of 2.0mass%.

(Production Example 12)

20 g of toluene was added to 82 g of the liquid A produced in Production Example 1 and the resultant mixture was stirred to obtain a dispersion L with a non-volatile content of 2.0mass%.

(Production Example 13)

50 g of isopropyl alcohol was added to 51.2 g of the liquid A produced in Production Example 1 and the resultant mixture was stirred to obtain a dispersion M with a non-volatile content of 1.3mass%.

(Production Example 14)

50 g of ethylene glycol was added to 51.2 g of the liquid A produced in Production Example 1 and the resultant mixture was stirred to obtain a dispersion N with a non-volatile content of 1.3mass%.

(Production Example 15)

Orgacon ICP1050 (PEDOT/PSS) manufactured by AGFA was treated with an ultrasonic homogenizer. Then, DMSO in an amount of 5wt% based on the total amount was added and the resultant mixture was stirred to obtain a dispersion O with a non-volatile content of 1.2%.

(Production Example 16) (Synthesis of PEDOT/(meth) acrylic polymer dopant)

78.0 g of sodium 2-(methacryloyloxy)ethanesulfonate, 15.0 g of 2-hydroxyethyl methacrylate, 7.0 g of 2-ethylhexyl methacrylate, 200 g of ion exchange water, 150 g of isopropyl alcohol were added into a 1L four-necked flask with a stirrer, a nitrogen gas introducing pipe, a reflux cooler, an inlet and a thermometer. While nitrogen gas was introduced into the flask, the mixture in the flask was heated to 70°C. Next, 0.2 g of azobisisobutyronitrile was added into the flask, and polymerization reaction was performed at 70°C for 18 hours to obtain a polymer solution. All the obtained polymer solution was transferred to a 2L beaker and 600 g of isopropyl alcohol was added under stirring with a stirrer. Thereafter, when the stirring was stopped, a precipitate was obtained. After filtering it under reduced pressure, the residue was dried at 100°C for 24 hours, and then pulverized in a mortar to obtain a high molecular compound powder.

1.38 g of the resulting high molecular compound powder, 500 g of ion exchange water, and 1.46 g of 25% hydrochloric acid aqueous solution were added into a 1L four-necked flask with a stirrer, a nitrogen gas introducing pipe, a reflux cooler, an inlet and a thermometer. The mixture was heated to 60°C, stirred for 3 hours, and then cooled to 25°C. The solution in the flask was uniformly transparent. Then, 1.42 g of 3,4-ethylenedioxythiophene (EDOT) was added to the solution in the flask, and the resultant mixture was stirred to obtain a uniform emulsion, and then heated to 80°C. Then, 14.3 g of iron sulfate (III) n hydrate (60-80% in content as iron sulfate (III)) dissolved in 30 g of ion exchange water was dropped in the flask kept at 80°C over 2 hours. After finishing the dropping, the polymerization reaction was performed at 80°C for 48 hours.

After completion of the polymerization reaction, the total amount of reaction liquid was transferred to an evaporator, and heated and distilled off under reduced pressure until the volume of a remaining amount of the reaction liquid became 50g. Thereafter, the reaction liquid was filtered under reduced pressure and the residue was transferred to a 0.5L beaker. The residue was washed with water by adding 50 g of ion exchange water, stirring the mixture with a stirrer for 30 minutes, and filtering the mixture under reduced pressure again.

The same water wash step was further repeated 3 times, then the residue was transferred to a 0.5L beaker. 50 g of n-hexane was added to the beaker and the mixture was stirred for 30 minutes, and filtered under reduced pressure. The residue was dried at 70°C under reduced pressure for 24 hours to obtain a conductive polymer having a (meth) copolymer as a dopant. A dispersion P was obtained by adding 1.0 g of the conductive polymer to a mixed solvent of 80 g of methanol and 20 g of benzyl alcohol, stirring and dispersing at room temperature.

[Various evaluations]

< Evaluation of particle diameter>

Using a particle diameter distribution measuring device (Nanotrac UPA-UT151, Nikkiso Co., Ltd.), the volume average particle diameter, D10, D50, and D90 in the dispersions A to P were measured by the photodynamic scattering method. The results are shown in Tables 1-1, 1-2.

<Evaluation of non-volatile content>

A certain amount of the dispersion A to P was measured on a tin dish and heated at 150°C for 3 hours, and the weight of each residual amount was measured. The results are shown in Tables 1-1, 1-2.

< Evaluation of conductivity>

Each of dispersion A to P was applied to a glass substrate in a size of 2cm × 2cm, and then dried at 150°C to form a 5 μm thin film. Thereafter, the conductivity of each thin film was measured by using a resistivity meter (Loresta GP, manufactured by Mitsubishi Chemical Analytech). The results are shown in Tables 1-1, 1-2.

< Evaluation of pore diameter>

Potassium fluorotantalate was added to the diluted salt and the potassium fluorotantalate in the diluted salt was reacted with sodium to produce 100kCV tantalum powder. The tantalum powder was formed into a pellet having a density of 4.5 g/cm$^3$ and the pellet was sintered at a temperature of 1200°C or higher in a degree of vacuum of $10^{-3}$ Pa to produce a sintered body. Thereafter, the pore diameter was measured by using a pore distribution measuring device (Micromeritec Autopore III 9400, manufactured by Shimadzu Corporation) by mercury intrusion porosimetry. The results are shown in Tables 1-1, 1-2. Detailed results of example 1 are shown in FIG. 2. The pores of example 1 were distributed between 0.1 and 2 $\mu$m, and the average pore diameter was 0.4 $\mu$m.

< Evaluation of capacitance appearance rate>

The 100kCV tantalum powder was formed into a pellet having a density of 4.5 g/cm$^3$ and the pellets was sintered at a temperature of 1200°C or higher in a degree of vacuum of $10^{-3}$ Pa to produce a sintered body. Thereafter, the sintered body was treated with 20V in a phosphoric acid electrolyte solution to form a dielectric oxide film, and a porous material including dielectric was obtained. The tantalum pellet was immersed in 41% sulfuric acid, and the capacity was measured with an LCR meter (4263B, manufactured by Agilent). (1)

The porous materials were immersed in the dispersions A to P to impregnate with the conductive polymer, and then dried at 150°C for 10 minutes to remove the solvent. The steps of immersing in the dispersions A to P and drying were repeated 4 times, and then silver paste was applied to the porous materials to obtain conductive polymer solid electrolytic capacitors with silver coating of examples 1 to 15 and comparative examples 1 to 3.

In addition, 28 g of 3,4-ethylenedioxythiophene (EDOT), 67 g of PTS Fe··n$H_2O$ (P-toluene sulfonic acid iron hydrate) and 100 g of butanol were mixed under cooling to 10°C or lower. The porous material including dielectric was immersed in the solution and the porous material impregnated with the solution was reacted at 100°C for 20 minutes, and at the same time, the solvent was removed. The steps of immersion and reaction were repeated 4 times, and then silver paste was applied to the porous material to obtain a conductive polymer solid electrolytic capacitor with a silver coating of comparative example 4.

After connecting to the terminals of these conductive polymer solid electrolytic capacitors, the capacitance was measured with an LCR meter. (2)

The capacitance appearance rate was calculated by the following formula. The results are shown in Tables 1-1,1-2.

$$\text{Capacitance appearance rate (\%)} = (2)/(1) \times 100$$

Table1-1

| | | Dispersion | P | A | Mole ratio EDOT/aldehyde | Dispersion medium | Particle diameter (nm) | | Non-vol-atile con-tent (%) | Conductivity (S/cm) | Average pore diam-eter (μm) | Capacity ap-pearance rate (%) |
|---|---|---|---|---|---|---|---|---|---|---|---|---|
| | | | | | | | D10/D50/D90 | D90/D10 | | | | |
| example | 1 | A | 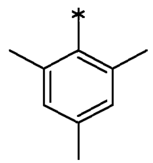 | 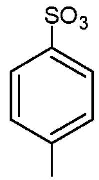 | 2/1 | PC | 1.2/2.6/4.2 | 3.5 | 2.4 | 0.2 | 0.4 | 94.9 |
| | 2 | | | | | | | | | | 0.6 | 96.9 |
| | 3 | B | 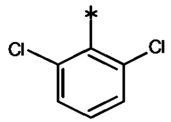 | | 2/1 | PC | 0.8/1.2/2.5 | 3.13 | 2.6 | 0.8 | 0.4 | 95.7 |
| | 4 | C | 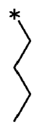 | | 4/1 | PC | 2.6/4.2/8.8 | 3.38 | 2.1 | 0.03 | 0.4 | 93.1 |
| | 5 | D | 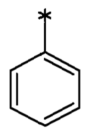 | | 4/1 | PC | 2.8/4.0/7.2 | 2.57 | 2.1 | 0.2 | 0.4 | 93.2 |
| | 6 | E | 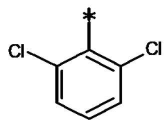 | BF4 | 1/1 | PC | 50/80/120 | 2.4 | 1.3 | 8.5 | 0.4 | 96.4 |
| | 7 | F | | (CF3SO2)N | 2/1 | PC | 0.5/0.8/1.5 | 3 | 2.3 | 0.03 | 0.4 | 95.7 |
| | 8 | G | | CF3COO | 2/1 | PC | 1.2/2.1/3.5 | 2.91 | 2.3 | 0.01 | 0.4 | 95.3 |
| | 9 | H | | PF6 | 2/1 | PC | 1.5/2.8/4.8 | 3.2 | 2.3 | 0.2 | 0.4 | 95.0 |
| | 10 | I | | PTS/PSS =5/5 | 2/1 | PC | 25/55/85 | 3.4 | 2.5 | 0.02 | 0.4 | 90.2 |

Table1-2

| | | Dispersion | R | A | Mole ratio EDOT/aldehyde | Dispersion medium | Particle diameter (nm) D10/D50/D90 | Particle diameter (nm) D90/D10 | Non-volatile content (%) | Conductivity (S/cm) | Average pore diameter (μm) | Capacity appearance rate (%) |
|---|---|---|---|---|---|---|---|---|---|---|---|---|
| example | 11 | J | 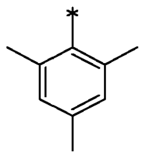 | 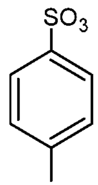 | 2/1 | γ BL | 1.1/2.2/3.2 | 2.91 | 2.5 | 0.1 | 0.4 | 95.2 |
| | 12 | K | | | 2/1 | PC/MEK =8/2 | 1.2/2.5/4.6 | 3.83 | 2.0 | 0.2 | 0.4 | 92.3 |
| | 13 | L | | | 2/1 | PC/To =8/2 | 1.4/3.1/6.2 | 4.42 | 2.0 | 0.2 | 0.4 | 94.8 |
| | 14 | M | | | 2/1 | PC/IPA =5/5 | 2.1/3.9/6.5 | 3.1 | 1.3 | 0.2 | 0.4 | 94.4 |
| | 15 | N | | | 2/1 | PC/EG =5/5 | 2.2/4.0/7.2 | 3.27 | 1.3 | 0.2 | 0.4 | 93.4 |
| comparative example | 1 | O | - | PSS | - | water+ DMSO(5%) | 15/20/50 | 3.33 | 1.2 | 400 | 0.4 | 81.8 |
| | 2 | | | | | | | | | | 0.6 | 85.2 |
| | 3 | P | - | Acrylic polymer dopant | - | MeOH/ BzOH =8/2 | 45/120/250 | 5.56 | 1.0 | 5 | 0.4 | 72.5 |
| | 4 | insitu | | | | - | - | - | - | - | 0.4 | 79.0 |

PC: propylene carbonate
γ-BL: γ-butyrolactone
MEK: methyl ethyl ketone
To: toluene
IPA: isopropyl alcohol
EG: ethylene glycol
DMSO: dimethyl sulfoxide
MeOH: methanol
BzOH: benzyl alcohol
BF4: boron tetrafluoride
PTS: p-toluene sulfonic acid
PSS: polystyrene sulfonic acid

<Discussion>

As shown in examples 1 to 15, the conductive polymer solid electrolytic capacitors with an excellent capacitance appearance rate of 90% or more were obtained by the method for manufacturing the conductive polymer solid electrolytic capacitor. In contrast, the conductive polymer solid electrolytic capacitors of comparative examples 1 to 3 using different conductive polymer solvents, and comparative example 4, in which single molecule, 3,4-ethylenedioxythiophene (EDOT), was reacted inside the capacitor, showed inferior capacitance appearance rate compared to examples 1 to 15 of the present invention.

**Reference list**

1 conductive polymer solid electrolytic capacitor
2 anode
3 dielectric
4 cathode

**Claims**

**1.** A method for manufacturing a conductive polymer solid electrolytic capacitor comprising:

a conductive polymer introduction step; and
a solvent removal step,
wherein:

the conductive polymer introduction step comprises impregnating a porous material with a dispersion,

the dispersion includes a conductive polymer dispersed in a non-aqueous solvent,
the conductive polymer includes at least one of the structural units represented by the following formula (1) and the following formula (2),

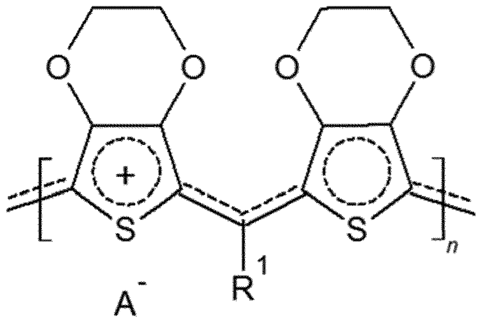 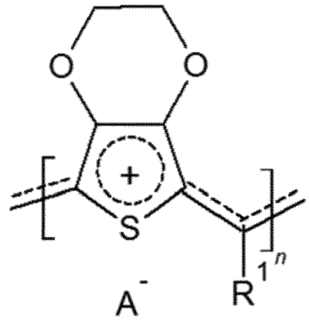

(1) (2)

in the formulas (1) and (2), $R^1$ is an alkyl group having 1 to 12 carbon atoms, an alkoxy group having 1 to 12 carbon atoms, an alkylene oxide group having 1 to 12 carbon atoms and having 1 to 50 repeating units, a phenyl group optionally having a substituent, a heterocyclic group optionally having a substituent, or a condensed ring group optionally having a substituent, $A^-$ is an anion derived from a dopant and *n* is 2 or more and 300 or less,
wherein 80 to 100 mass% of the dopant include a dopant having 1 or 2 anions in one dopant molecule;
the conductive polymer has a volume average particle diameter D50 of 0.1 to 100 nm in the dispersion, measured by a photodynamic scattering method;
the porous material includes an electrode material which is a sintered body of particles, and a dielectric covering a surface of the electrode material; and

the solvent removal step comprises removing at least a part of the non-aqueous solvent and forming a solid electrolyte which covers the surface of the porous material.

**2.** The method of Claim 1, wherein an average pore diameter of the porous material is 0.03 μm or more and 5.0 μm or less, measured by mercury intrusion porosimetry.

**3.** The method of Claim 1 or 2, wherein the electrode material includes tantalum, niobium, or an alloy thereof.

**4.** The method of any one of Claims 1 to 3, wherein the dopant includes at least one atom selected from the group consisting of oxygen, fluorine, and nitrogen.

**5.** A dispersion including a conductive polymer dispersed in a non-aqueous solvent, wherein:
the conductive polymer comprising at least one of the structural units represented by the following formula (1) and the following formula (2)

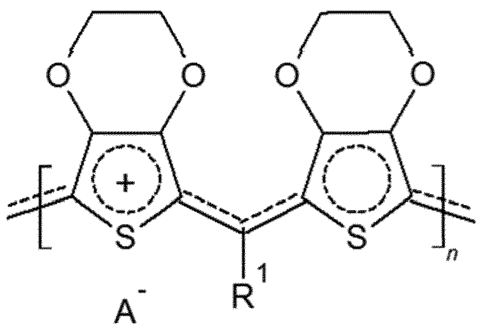 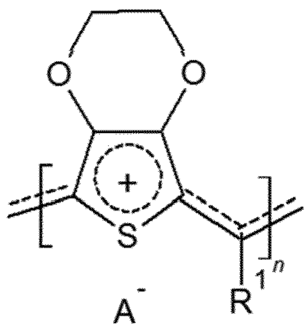

(1) (2)

in the formulas (1) and (2), $R^1$ is an alkyl group having 1 to 12 carbon atoms, an alkoxy group having 1 to 12 carbon atoms, an alkylene oxide group having 1 to 12 carbon atoms and having 1 to 50 repeating units, a phenyl group optionally having a substituent, a heterocyclic group optionally having a substituent, or a condensed ring

group optionally having a substituent, $A^-$ is an anion derived from a dopant and *n* is 2 or more and 300 or less; the dopant includes at least one selected from the group consisting of a sulfonic acid derivative, a boronic acid derivative, a carboxylic acid derivative, and a phosphoric acid derivative; **characterized in that** 80 to 100 mass% of the dopant include a dopant having 1 or 2 anions in one dopant molecule; and
the conductive polymer has a volume average particle diameter D50 of 0.1 to 100 nm in the dispersion, measured by a photodynamic scattering method.

## Patentansprüche

**1.** Verfahren zur Herstellung eines ein leitfähiges Polymer umfassenden Festelektrolytkondensators, umfassend:

einen Schritt der Einbringung eines leitfähigen Polymers; und
einen Lösungsmittelentfernungsschritt,
wobei:

der Schritt der Einbringung eines leitfähigen Polymers das Tränken eines porösen Materials mit einer Dispersion umfasst,

wobei die Dispersion ein leitfähiges Polymer umfasst, das in einem nichtwässrigen Lösungsmittel dispergiert ist,
das leitfähige Polymer wenigstens eine der Struktureinheiten umfasst, die durch die folgende Formel (1) und die folgende Formel (2) dargestellt werden

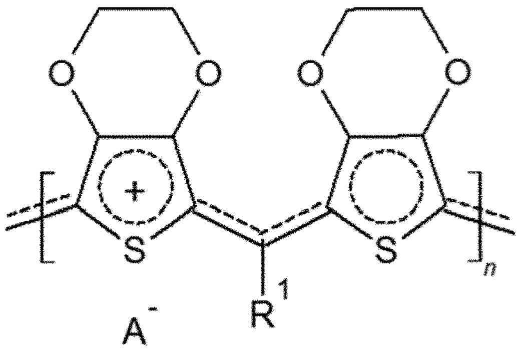

(1)

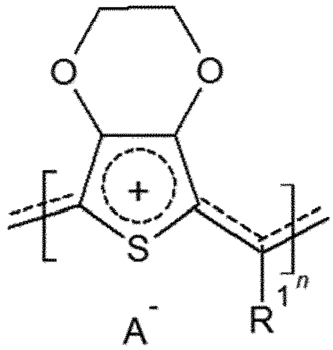

(2)

in den Formeln (1) und (2) $R^1$ eine Alkylgruppe mit 1 bis 12 Kohlenstoffatomen, eine Alkoxygruppe mit 1 bis 12 Kohlenstoffatomen, eine Alkylenoxidgruppe mit 1 bis 12 Kohlenstoffatomen und mit 1 bis 50 Wiederholungseinheiten, eine Phenylgruppe, die optional einen Substituenten aufweist, eine heterocyclische Gruppe, die optional einen Substituenten aufweist, oder eine kondensierte Ringgruppe, die optional einen Substituenten aufweist, ist, $A^-$ ein Anion ist, das von einem Dotierstoff abgeleitet ist, und *n* 2 oder mehr und 300 oder weniger beträgt,
wobei 80 bis 100 Masse-% des Dotierstoffs einen Dotierstoff mit 1 oder 2 Anionen in einem Dotierstoffmolekül umfassen;
das leitfähige Polymer einen volumenbezogenen durchschnittlichen Partikeldurchmesser D50 von 0,1 bis 100 nm in der Dispersion, gemessen mit einem photodynamischen Streuungsverfahren, aufweist,
das poröse Material ein Elektrodenmaterial, das ein Sinterkörper aus Partikeln ist, und ein Dielektrikum, das eine Oberfläche des Elektrodenmaterials bedeckt, umfasst; und

der Lösungsmittelentfernungsschritt das Entfernen wenigstens eines Teils des nichtwässrigen Lösungsmittels und des Ausbildens eines Festelektrolyten, der die Oberfläche des porösen Materials bedeckt, umfasst.

**2.** Verfahren nach Anspruch 1, wobei ein durchschnittlicher Porendurchmesser des porösen Materials 0,03 µm oder mehr und 5,0 µm oder weniger, gemessen mittels Quecksilberporosimetrie, beträgt.

**3.** Verfahren nach Anspruch 1 oder 2, wobei das Elektrodenmaterial Tantal, Niob oder eine Legierung davon umfasst.

**4.** Verfahren nach einem der Ansprüche 1 bis 3, wobei der Dotierstoff wenigstens ein Atom, ausgewählt aus der Gruppe bestehend aus Sauerstoff, Fluor und Stickstoff, umfasst.

**5.** Dispersion, die ein leitfähiges Polymer umfasst, das in einem nichtwässrigen Lösungsmittel dispergiert ist, wobei: das leitfähige Polymer wenigstens eine der Struktureinheiten umfasst, die durch die folgende Formel (1) und die folgende Formel (2) dargestellt werden

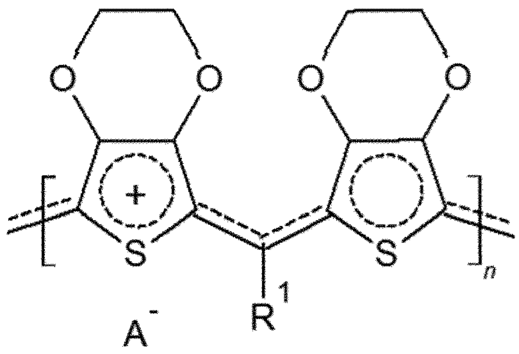

(1)

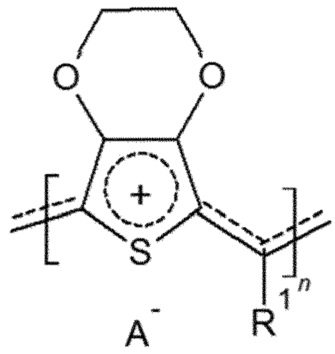

(2)

wobei in den Formeln (1) und (2) $R^1$ eine Alkylgruppe mit 1 bis 12 Kohlenstoffatomen, eine Alkoxygruppe mit 1 bis 12 Kohlenstoffatomen, eine Alkylenoxidgruppe mit 1 bis 12 Kohlenstoffatomen und mit 1 bis 50 Wiederholungseinheiten, eine Phenylgruppe, die optional einen Substituenten aufweist, eine heterocyclische Gruppe, die optional einen Substituenten aufweist, oder eine kondensierte Ringgruppe, die optional einen Substituenten aufweist, ist, $A^-$ ein Anion ist, das von einem Dotierstoff abgeleitet ist, und *n* 2 oder mehr und 300 oder weniger beträgt,
der Dotierstoff wenigstens eines, ausgewählt aus der Gruppe bestehend aus einem Sulfonsäurederivat, einem Boronsäurederivat, einem Carbonsäurederivat und einem Phosphorsäurederivat, umfasst,
**dadurch gekennzeichnet, dass** 80 bis 100 Masse-% des Dotierstoffs einen Dotierstoff mit 1 oder 2 Anionen in einem Dotierstoffmolekül umfassen; und
das leitfähige Polymer einen volumenbezogenen durchschnittlichen Partikeldurchmesser D50 von 0,1 bis 100 nm in der Dispersion, gemessen mit einem photodynamischen Streuungsverfahren, aufweist.

## Revendications

**1.** Méthode de fabrication d'un condensateur à électrolyte solide en polymère conducteur, comprenant :

une étape d'introduction d'un polymère conducteur ; et
une étape d'élimination du solvant,
où :

l'étape d'introduction d'un polymère conducteur comprend l'imprégnation d'un matériau poreux avec une dispersion,

la dispersion inclut un polymère conducteur dispersé dans un solvant non aqueux,
le polymère conducteur inclut au moins une des unités structurales représentées par la formule (1) suivante et la formule (2) suivante,

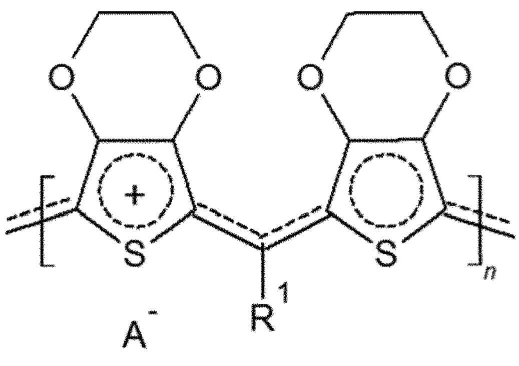

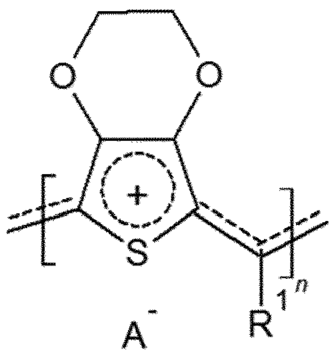

(1) (2)

dans les formules (1) et (2), $R^1$ représente un groupement alkyle à 1 à 12 atomes de carbone, un groupement alkoxy à 1 à 12 atomes de carbone, un groupement oxyde d'alkylène à 1 à 12 atomes de carbone et ayant 1 à 50 motifs de répétition, un groupement phényle portant éventuellement un substituant, un groupement hétérocyclique portant éventuellement un substituant ou un groupement cyclique condensé portant éventuellement un substituant, $A^-$ est un anion dérivé d'un dopant et *n* est égal ou supérieur à 2 et inférieur ou égal à 300,

où de 80 à 100 % en masse du dopant inclut un dopant ayant 1 ou 2 anions par molécule de dopant ;

le polymère conducteur contenu dans la dispersion a diamètre particulaire moyen en volume D50, mesuré par une méthode de diffusion dynamique de la lumière, dans la plage de 0,1 à 100 nm ;

la matériau poreux inclut un matériau électrodique qui est un corps constitué de particules frittées et un diélectrique couvrant une surface du matériau électrodique ; et

l'étape d'élimination du solvent comprend l'élimination d'une partie au moins du solvant non aqueux et la formation d'un électrolyte solide qui couvre la surface du matériau poreux.

2. Méthode de la revendication 1, où un diamètre moyen des pores du matériau poreux, mesuré par porosimétrie au mercure, est égal ou supérieur à 0,03 $\mu$m et inférieur ou égal à 5,0 $\mu$m.

3. Méthode de la revendication 1 ou 2, où le matériau électrodique inclut le tantale, le niobium ou un alliage de ceux-ci.

4. Méthode de l'une quelconque des revendications 1 à 3, où le dopant contient au moins un atome sélectionné dans le groupe consistant en l'oxygène, le fluor et l'azote.

5. Dispersion incluant un polymère conducteur dispersé dans un solvant non aqueux, où : le polymère conducteur comprend au moins une des unités structurales représentées par la formule (1) suivante et la formule (2) suivante

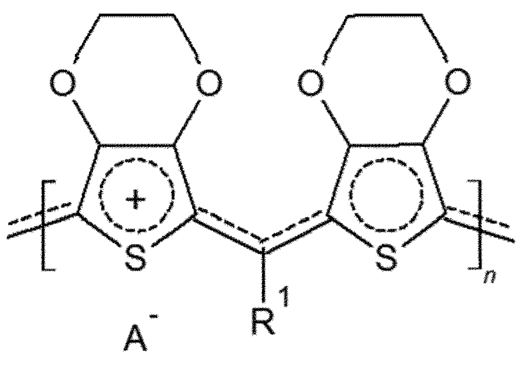

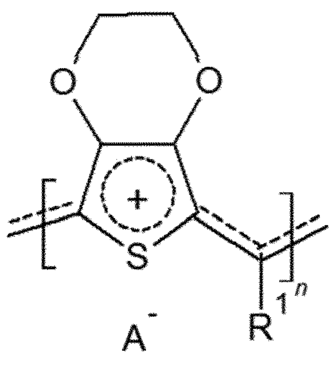

(1) (2)

dans les formules (1) et (2), $R^1$ représente un groupement alkyle à 1 à 12 atomes de carbone, un groupement alkoxy à 1 à 12 atomes de carbone, un groupement oxyde d'alkylène à 1 à 12 atomes de carbone et ayant 1 à 50 motifs de répétition, un groupement phényle portant éventuellement un substituant, un groupement hétérocyclique portant éventuellement un substituant ou un groupement cyclique condensé portant éventuellement un substituant, $A^-$ est un anion dérivé d'un dopant et *n* est égal ou supérieur à 2 et inférieur ou égal à 300 ;
le dopant inclut un au moins sélectionné dans le groupe consistant en un dérivé d'un acide sulfonique, un dérivé d'un acide boronique, un dérivé d'un acide carboxylique et un dérivé d'un acide phosphorique ;
**caractérisé en ce que** de 80 à 100 % en masse du dopant inclut un dopant ayant 1 ou 2 anions par molécule de dopant ; et
le polymère conducteur a diamètre particulaire moyen en volume D50, mesuré par une méthode de diffusion dynamique de la lumière, dans la plage de 0,1 à 100 nm.

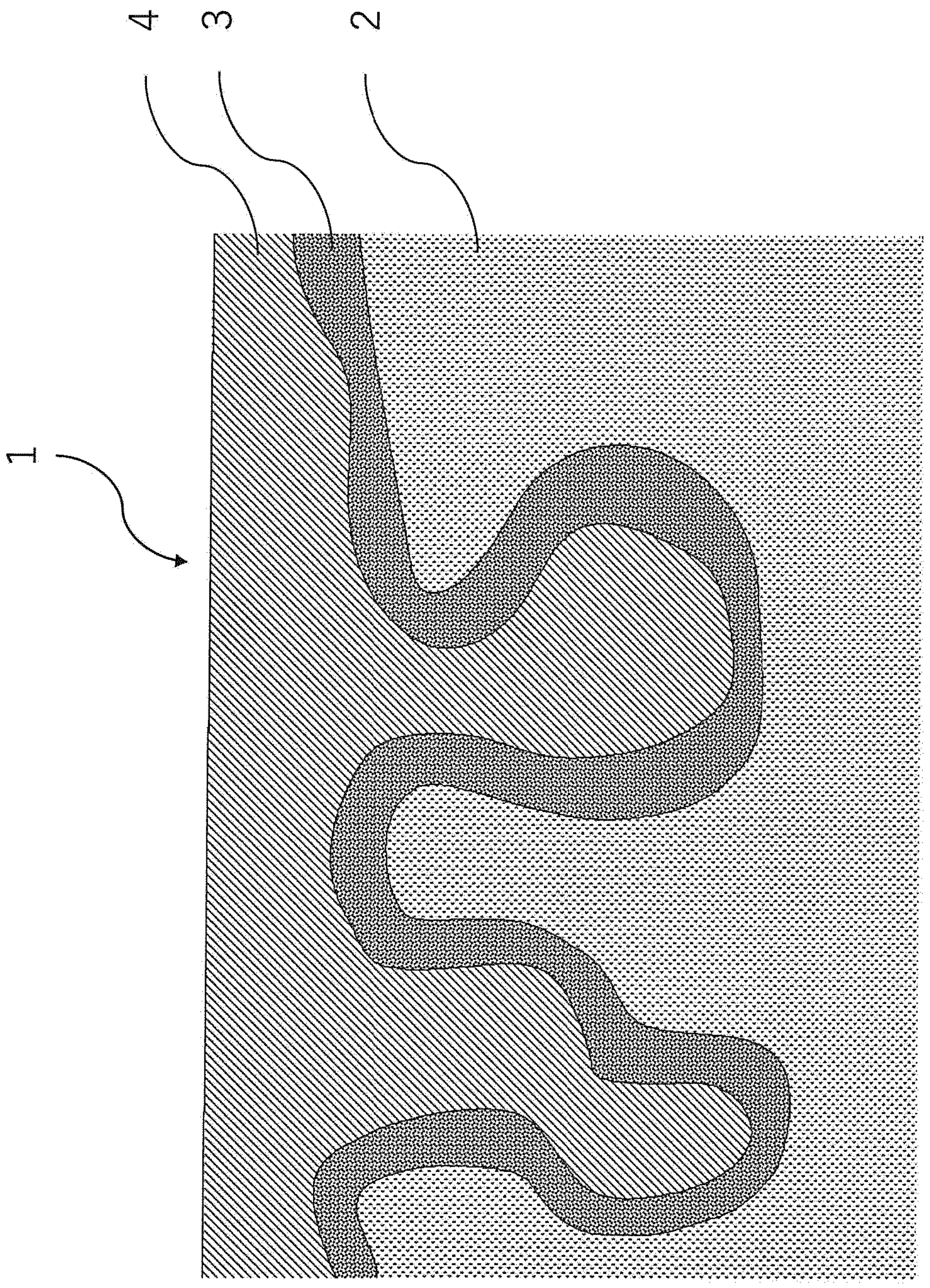


Fig. 1

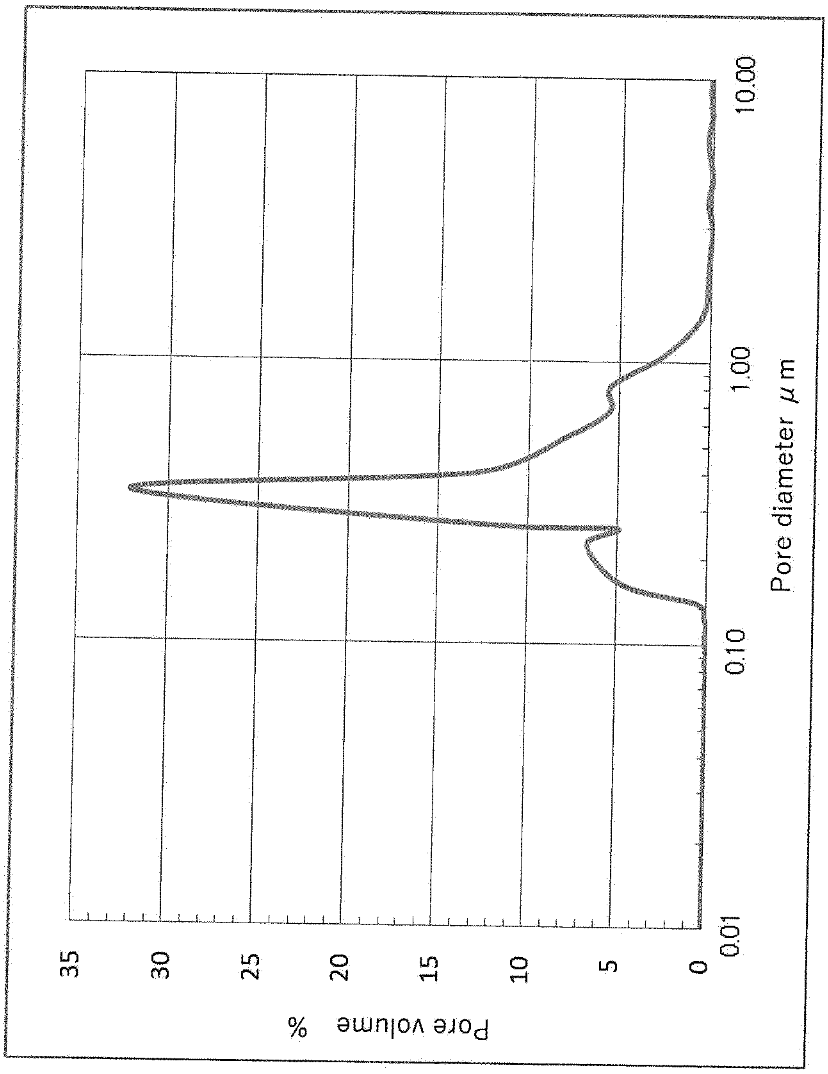
Pore volume %
35
30
25
20
15
10
5
0
0.01
0.10
1.00
10.00
Pore diameter μm

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009508341 A
- WO 2016111277 A
- US 20140211372 A1
- US 20110182002 A1
- US 20130279079 A1